# EUROPÄISCHE PATENTSCHRIFT

(11) **EP 1 055 159 B1**
(45) Veröffentlichungstag und Bekanntmachung des Hinweises auf die Patenterteilung: **08.03.2006**
(21) Anmeldenummer: 98966574.0
(22) Anmeldetag: 22.12.1998
(51) Int. Cl.: G05B 19/042, G06F 11/00

(54) **FEHLERSICHERE PROZESSEINGABE UND PROZESSAUSGABE**
TROUBLEPROOF PROCESS INPUT AND OUTPUT
ENTREE ET SORTIE A SECURITE INTRINSEQUE DE SIGNAUX DE PROCESSUS

(30) Priorität: 14.01.1998 DE 19801137
(43) Veröffentlichungstag der Anmeldung: 29.11.2000
(73) Patentinhaber: SIEMENS AKTIENGESELLSCHAFT, 80333 München (DE)
(72) Erfinder: TRAUTH, Armin, D-76829 Landau (DE); ZÄCH, Jörg-Peter, D-90425 Nürnberg (DE); WEBER, Karl, D-90518 Altdorf (DE); BIRZER, Johannes, D-92536 Pfreind (DE); BARTHEL, Herbert, D-91074 Herzogenaurach (DE); SCHÜTZ, Hartmut, D-91336 Heroldsbach (DE); FUCHS, Heiner, D-91056 Erlangen (DE); VON KROSIGK, Hartmut, D-91058 Erlangen (DE); SCHENK, Andreas, D-91052 Erlangen (DE)
(86) Internationale Anmeldenummer: PCT/DE1998/003771
(87) Internationale Veröffentlichungsnummer: WO 1999/036840

(56) Entgegenhaltungen:
- EP-A- 0 770 942
- EP-A- 0 837 394
- EP-B- 0 524 330
- DE-A- 3 024 370
- DE-A- 4 041 550
- DE-A- 4 312 305
- US-A- 4 680 753
- MOHLENBEIN H: "INTERBUS-DEZENTRALE ECHTZEIT-PERIPHERIE FUER STANDARD-SPS-SYSTEME" ELEKTRIE, Bd. 44, Nr. 7, 1. Januar 1990, Seiten 244-249, XP000162759
- HERTEL J: "ABSOLUT SICHERES GELEIT. REDUNDANZSTRUKTUREN IM MODERNEN PROZESSLEITSYSTEM TELEPERM XP" MESSEN UND PRUFEN, Bd. 31, Nr. 10, 1. Oktober 1995, Seiten 10, 12-14, 16, XP000543694

## Beschreibung

Die vorliegende Erfindung betrifft ein Verfahren zum Betrieb eines Automatisierungssystems, wobei das Automatisierungssystem mindestens eine Eingabeeinheit zur Aufnahme von Prozeßsignalen und mindestens eine Ausgabeeinheit zum Ansteuern externer Peripherie aufweist, wobei die Eingabeeinheit und die Ausgabeeinheit kommunikativ über einen Bus miteinander verbunden sind.

Um bei Automatisierungsvorhaben, die von einem gattungsgemäßen Automatisierungssystem gesteuert und/oder überwacht werden, in Notsituationen ein schnelles Abschalten der automatisierten Prozesse oder einzelner Vorgängen zur erreichen, ist bisher eine Not-Aus-Behandlung in Form einer Not-Aus-Kette vorgesehen.

In eine derartige Not-Aus-Kette werden Not-Aus-Schalter, Lichtgitter, Tretmatten oder Ähnliches integriert. Aufgrund der an eine Not-Aus-Behandlung zu stellenden Anforderungen ist es üblich, die Not-Aus-Behandlung in herkömmlicher Verdrahtung auszuführen. Als Beispiel sei hier ein Tunnelofen genannt, der bezüglich des Automatisierungsprozesses in mehrere Segmente unterteilt ist. An für den Benutzer zugänglichen Positionen an der Außenseite des Tunnelofens sind für die Not-Aus-Behandlung z.B. Not-Aus-Taster vorgesehen, wobei die Betätigung eines Not-Aus-Tasters je nach Auslegung der automatisierten Gesamtanlage, z.B. das definierte Herunterfahren des gesamten Prozesses nach sich zieht.

Die Not-Aus-Taster sind Feldgeräte mit einer Eingabefunktion. Die Geräte, die das Herunterfahren des Prozesses bewirken, sind entsprechend Geräte mit einer Ausgabefunktion zur Ansteuerung externer Peripherie, z.B. also Ausgabegeräte, die einen Motor für Transportprozesse, einen Motor für Ventilation, ein Hydraulikaggregat zur Positionierung o.ä. steuern.

Im Falle einer Not-Aus-Situation ist das unmittelbare Abschalten der externen Peripherie erforderlich. Zu diesem Zweck ist zwischen den Eingabegeräten, also den Not-Aus-Tastern, und den Ausgabegeräten, wie den Motoren oder den Aggregaten, eine Not-Aus-Kette aufgebaut, die bisher in konventioneller Verdrahtung auszuführen war und die beim Betätigen eines Not-Aus-Tasters ein unmittelbares Abschalten des Motors bzw. ein unmittelbares Abschalten des Hydraulikaggregates bewirkt. Die konventionelle Verdrahtung ist dabei bisher aufgrund der Sicherheitsanforderungen, die an eine Not-Aus-Behandlung zu stellen sind, erforderlich.

Dabei ist es jedoch nachteilig, bei großflächigen Automatisierungsprojekten wie z.B. bei den beschriebenen Tunnelöfen, die konventionelle Verdrahtung im gesamten Prozeßfeld vorzusehen.

Aus der DE 43 12 305 A1 ist bekannt, eine Standard-SPS durch Ergänzungen zu einer sicherheitsgerichteten SPS zu ertüchtigen. Zu den vorgeschlagenen Ergänzungen gehören spezielle sicherheitsgerichtete Ein-/Ausgabegeräte, die intern zweikanalig aufgebaut sind und selbsttätig sowohl einen Vergleichstest zwischen ihren Kanälen als auch zusätzliche Eigenüberwachungsfunktionen durchführen. Als weitere Ergänzung sind sicherheitsgerichtete Programm-Module im Anwenderprogramm der Zentraleinheit der SPS vorhanden, die eine redundante Überwachung der sicherheitsgerichteten Ein-/Ausgabegeräte und eine Eigenüberwachung der Zentraleinheit vornehmen. Die so gebildete sicherheitsgerichtete SPS ist geeignet zur Steuerung von Prozessen, die durch Abschalten in einen sicheren Zustand gebracht werden können.

Die US 4 680 753 beschreibt ein Steuerungssystem mit Knoten oder Stationen, welche seriell über einen Kommunikationsbus verbunden sind. Jede Station enthält ein Kommunikationsmodul, welches wiederum mit einem programmierbaren Controller verbunden ist. Jeder Controller weist konventionelle Ein-/Ausgabemittel auf, welche der Eingabe von Prozessdaten bzw. der Ausgabe von vom Controller verarbeiteten Steuerungsdaten dienen.

Aus der DE 30 24 370 A1 ist ein redundantes Steuersystem mit mehreren parallel arbeitenden, gleiche Daten nach übereinstimmenden Programmen verarbeitenden Teilsystemen bekannt. Die Teilsysteme enthalten je eine Zentraleinheit, Speicher sowie periphere Einheiten, wobei die Zentraleinheiten, die Speicher und die peripheren Einheiten verschiedener Teilsysteme einander entsprechen. Das Steuersystem weist außerdem mindesten eine Vergleichseinrichtung auf, welche die in den Teilsystemen auftretenden Signale vergleicht und bei Ungleichheit ein Fehlersignal abgibt. Die Vergleichseinrichtung enthält einen Fehlersignalspeicher, dessen Inhalt von den Zentraleinheiten wahlweise abrufbar ist.

Der Erfindung liegt daher die Aufgabe zugrunde, ein Verfahren zum Betrieb eines Automatisierungssystems anzugeben, bei dem zur Behandlung von Not-Aus-Situationen auf die konventionelle Verdrahtung verzichtet werden kann und statt dessen eine kommunikative Verbindung zwischen den Komponenten der Not-Aus-Kette über den Bus des Automatisierungssystems besteht.

Erfindungsgemäß ist daher vorgesehen, für die Not-Aus-Behandlung auf die konventionelle Verdrahtung zu verzichten und sämtliche Feldgeräte, d.h. also auch die Not-Aus-Taster und die in die Not-Aus-Kette einzubindenden Motoren oder Aggregate, über den Prozeßbus kommunikativ zu verbinden.

Diese Aufgabe wird für ein Verfahren zum Betrieb eines Automatisierungssystems, wobei das Automatisierungssystem mindestens eine Eingabeeinheit zur Aufnahme von Prozeßsignalen und mindestens eine Ausgabeeinheit zum Ansteuern externer Peripherie aufweist, wobei die mindestens eine Eingabeeinheit und die mindestens eine Ausgabeeinheit kommunikativ über einen Bus miteinander verbunden sind, dadurch gelöst, daß zumindest eine der Eingabeeinheiten und zumindest eine der Ausgabeeinheiten als fehlersichere Eingabeeinheit bzw. fehlersichere Ausgabeeinheit ausgebildet sind, daß die fehlersichere Eingabeeinheit der fehlersicheren Ausgabeeinheit zu vorgegebenen Zeitpunkten ein Datum übermittelt, daß das Datum zumindest ein Nutzinformation, eine die adressierte Ausgabeeinheit bezeichnende Zielkennung und eine die sendende Eingabeeinheit bezeichnende Ursprungskennung aufweist, daß die Ausgabeeinheit den kontinuierlichen Empfang des Datums als Indiz für eine intakte Kommunikationsbeziehung auswertet und andernfalls die angeschlossene Peripherie in einen sicheren Zustand überführt.

Die an eine Not-Aus-Behandlung zu stellenden Sicherheitsanforderungen werden gemäß der Erfindung erfüllt, wenn die Eingabegeräte, also z.B. die Not-Aus-Taster und die in die Not-Aus-Kette einzubindenden Ausgabegeräte, die zur Ansteuerung der Motoren oder Aggregate vorgesehen sind, jeweils fehlersicher ausgeführt sind. Im Falle einer Not-Aus-Situation ergibt sich dann in der automatisierten Anlage folgender Ablauf:

Beim Betätigen eines Not-Aus-Tasters wird durch das Dateneingabegerät ein Datum auf den Bus gelegt. Das zu übermittelnde Datum weist gemäß den Spezifikationen des für die physikalische Kommunikationsverbindung verwendeten Busprotokolls zumindest ein Nutzinformation, in diesem Falle also die Information, ob der Not-Aus-Taster gedrückt ist oder nicht, zumindest eine Zieladresse, also die Adresse des Kommunikationsteilnehmers, an die die Nachricht gesendet wird - wobei eine spezielle Kennung ein Versenden der Nachricht an alle Kommunikationsteilnehmer ermöglicht - sowie schließlich die Ursprungskennung, die den Absender des Datums identifiziert, auf.

Die Erfindung kann nun einmal so eingesetzt werden, daß das Datum an einen ganz bestimmten Kommunikationsteilnehmer versendet wird, wobei der Adressat anhand der im Datum enthaltenen Zieladresse erkennt, daß das Datum für ihn bestimmt ist, oder daß das Datum an alle Kommunikationteilnehmer versendet wird, wobei jeder einzelne Kommunikationsteilnehmer anhand der Ursprungsadresse des Datums ermittelt, ob das Datum, also die Nutzinformation des Datums von ihm auszuwerten ist.

Andererseits kann das Datum auch an eine übergeordnete Einheit des Automatisierungssystems, z.B. die Zentraleinheit einer speicherprogrammierbaren Steuerung, versendet werden, wobei diese wiederum an der Ursprungskennung des Datums erkennt, daß eine Nachricht, z.B. von einem Not-Aus-Taster eingetroffen ist, die einer unmittelbaren Behandlung bedarf, so daß die Zentraleinheit unmittelbar nach Detektion des Datums dieses an die Ausgabegeräte weiterleitet, so daß diese ein Herunterfahren bzw. Abschalten der an die Ausgabegeräte angeschlossenen Motoren oder Aggregate auslösen bzw. selbst ein weiteres Datum an die Ausgabegeräte absetzen, das zum gleichen Resultat führt.

Die Ausgabeeinheit wertet dabei den kontinuierlichen Empfang des Datums von der Eingabeeinheit als Indiz für eine intakte Kommunikationsbeziehung. Für den Fall, daß die Ausgabeeinheit das Ausbleiben eines Datums von einer Eingabeeinheit während einer Zeitspanne, die größer als eine vorgebbare Zeitspanne ist, feststellt, überführt die Ausgabeeinheit die angeschlossene Peripherie in einem sicheren Zustand und sorgt damit wieder für das Herunterfahren der angeschlossenen Motoren oder Aggregate.

Zum Einsatz im Rahmen des erfindungsgemäßen Verfahrens zum Betrieb eines Automatisierungssystems ist ferner ein fehlersicheres Dateneingabegerät mit mindestens einem Eingabekanal zum Anschluß peripherer Sensorik vorgesehen, für das eine Prüfschaltung vorgesehen ist, die zu vorgegebenen Zeiten einen Prüfvorgang auslöst und dabei für mindestens einen der Eingabekanäle des fehlersicheren Eingabegerätes einen Statuswechsel bewirkt, wobei eine interne Logik den Statuswechsel überwacht und ggfs. eine Fehlermeldung ausgibt, wobei der durch die Prüfschaltung bewirkte Statuswechsel am Ende des Prüfvorgangs wieder rückgängig gemacht wird und wobei der Prüfvorgang für das Auslesen des betroffenen Eingabekanals vollkommen transparent ist.

Für den Einsatz im Rahmen des erfindungsgemäßen Verfahrens zum Betrieb eines Automatisierungssystems ist ferner oder alternativ ein fehlersicheres Dateneingabegerät mit mindestens einem Eingabekanal zum Anschluß peripherer Sensorik vorgesehen, bei dem der mindestens eine Eingabekanal antivalent ausgelegt ist.

Die gemäß der obenstehenden Beschreibung ausgeführten fehlersicheren Eingabegeräte werden durch die genannten Maßnahmen, d.h. durch die antivalente Auslegung des Eingabekanals bzw. durch die Überwachung des Eingabekanals mittels einer Prüfschaltung zu fehlersicheren Dateneingabegeräten, wobei die beiden Maßnahmen auch kombinierbar sind.

Zum Einsatz im Rahmen des erfindungsgemäßen Verfahrens zum Betrieb eines Automatisierungssystems ist ferner eine fehlersicheres Ausgabegerät ausgebildete Ausgabeeinheit vorgesehen.

Wenn für das fehlersichere Datenausgabegerät eine Verarbeitungseinheit zur Verarbeitung benutzer-projektierbarer logischer Verknüpfungen vorgesehen ist, wobei die Verarbeitungseinheit das Nutzinformation eines empfangenen Datums auswertet, das Nutzinformation der benutzerprojektierbaren logischen Verknüpfung unterwirft und entsprechend dem Ergebnis der logischen Verknüpfung den mindestens einen Ausgabekanal ansteuert, sind Softwarekomponenten, die bisher üblicherweise in einem übergeordneten Automatisierungsgerät, z.B. der Zentraleinheit einer speicherprogrammierbaren Steuerung, vorgesehen waren, auch in das fehlersichere Ausgabegerät verlagerbar, so daß hier eine besonders schnelle und effektive Verarbeitung und Auswertung der logischen Verknüpfungen möglich ist.

Wenn für das fehlersichere Datenausgabegerät die Verarbeitungseinheit ferner oder alternativ die zeitliche Abfolge der mit dem Nutzinformation übermittelten Prozeßdaten überwacht, und dem mindestens Ausgabekanal nur dann ansteuert, wenn die zeitliche Abfolge der zur Ansteuerung des Ausgabekanals erforderlichen Daten innerhalb vorgebbarer Toleranzen liegt, ist ein sog. Muting möglich, das zur Erhöhung der Sicherheit des automatisierten Prozesses beiträgt. Als Beispiel sei die Absicherung einer Fahrbühne mittels eines induktiven Endschalters und einer Lichtschranke genannt. Die Fahrbühne löst bei ihrer Bewegung sowohl den induktiven Endschalter als auch die Lichtschranke in einer gewissen, durch die Geschwindigkeit der Fahrbühne bestimmten zeitlichen Abfolge aus.

Wenn die zeitliche Abfolge des Eingangs der zugehörigen Signale innerhalb der vorgebenen Toleranzen liegt, kann die Verarbeitung fortgesetzt werden. Eine Person dagegen löst nur die Lichtschranke aus, während das zusätzliche Signal des induktiven Endschalters während der vorgegebenen Toleranzzeit ausbleibt. Eine solche Konstellation ist als Alarmkonstellation auswertbar, auf die mit einer Not-Aus-Behandlung reagiert werden kann.

Wenn für das fehlersichere Datenausgabegerät eine als watchdog ausgebildete und die Verarbeitungseinheit überwachende Überwachungsschaltung vorgesehen ist, welche den mindestens einen Ausgabekanal in einen sicheren Zustand überführt, sobald eine Fehlfunktion der Verarbeitungseinheit festgestellt ist, ist über die als watchdog ausgebildete Überwachungsschaltung ein zweiter Abschaltweg etabliert. Wenn z.B. die Verarbeitungseinheit nicht mehr in der Lage ist, einen speziellen Ausgang abzuschalten, würde ohne die Überwachungsschaltung ein Motor oder ein Aggregat z.B. permanent aktiviert bleiben. Die als watchdog ausgebildete Überwachungsschaltung erkennt derartige Zustände und schaltet beim Erkennen eines solchen Zustands die Ausgänge in einen sicheren Zustand.

Wenn bei dem fehlersicheren Datenausgabegerät, der durch die Verarbeitungseinheit ansteuerbare Ausgabekanal als rücklesbarer Ausgabekanal ausgebildet ist, das dem Ausgabekanal zuführbare Signal auch der Überwachungsschaltung zuführbar ist, die Überwachungsschaltung das ihr zugeführte und das vom Ausgabekanal zurückgelesene Signal vergleicht und bei Abweichungen den betroffenen Ausgabekanal oder auch sämtliche Ausgabekanäle bzw. die daran angeschlossene Peripherie in einen sicheren Zustand überführt, werden Diskrepanzen der Ansteuerung der jeweiligen Ausgabekanäle erkannt und diese unmittelbar in einen sicheren Zustand überführt.

Weitere Merkmale, Vorteile und Anwendungsmöglichkeiten der vorliegenden Erfindung ergeben sich aus den Unteransprüchen der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung. Dabei zeigen:
- FIG 1: ein vereinfachtes Blockschaltbild eines Automatisierungssystem,
- FIG 2: ein Blockschaltbild eines fehlersicheren Dateneingabegerätes und
- FIG 3: ein Blockschaltbild eines fehlersicheren Datenausgabegerätes.

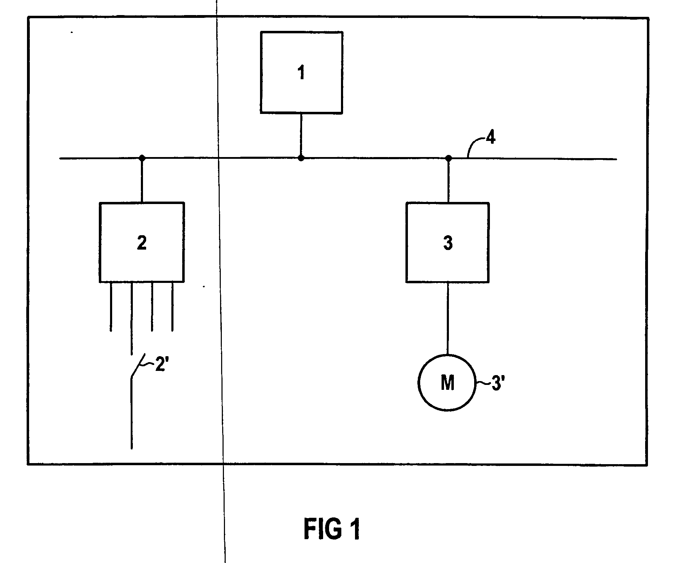

In FIG 1 ist exemplarisch ein Blockschaltbild eines einfachen Automatisierungssystemes mit einem fehlersicheren Dateneingabegerät, einem fehlersicheren Datenausgabegerät 3, und einem übergeordneten Automatisierungsgerät 3, z.B. der Zentraleinheit 1 einer speicherprogrammierbaren Steuerung dargestellt. Die Geräte sind über einen Bus 4, vorzugsweise über einen zum Einsatz in Industrieumgebungen geeigneten Bus 4, insbesondere den Profibus 4, kommunikativ miteinander verbunden.

An das fehlersichere Dateneingabegerät 2 ist ein Not-Aus-Taster 2' angeschlossen. An das fehlersichere Datenausgabegerät 3 ist ein Motor 3' angeschlossen. Wenn der Not-Aus-Taster 2' betätigt wird, nimmt das Dateneingabegerät 2 dieses Signal auf, übermittelt es über den Bus 4 an das Datenausgabegerät 3, das daraufhin das Abschalten des Motors 3' bewirkt.

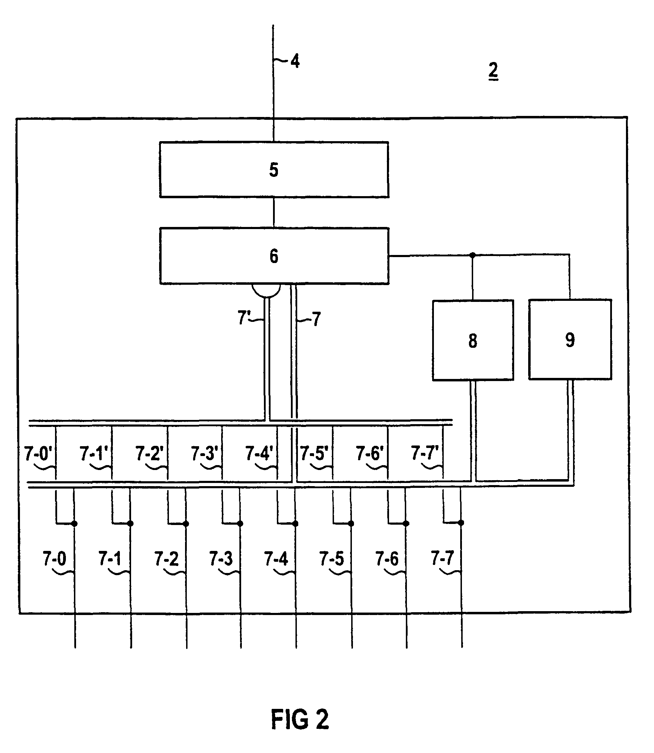

In FIG 2 ein Blockschaltbild ist eine erste Ausgestaltung eines fehlersicheren Dateneingabegerätes 2 dargestellt. Das fehlersichere Dateneingabegerät 2 ist über den Bus 4 kommunikativ mit anderen an den Bus 4 angeschlossenen Geräten 1, 2, 3, verbunden, dabei ist die Busanschaltung durch ein Bus-ASIC 5 bewirkt. Die Funktionen des Dateneingabegerätes 2 werden durch eine Verarbeitungseinheit 6, die z.B. ein ASIC oder ein Mikroprozessor ist, bewirkt. Der Verarbeitungseinheit 6 werden direkt oder indirekt die Eingangskanäle 7-0, 7-1...7-7 zugeführt.

Ferner ist im Dateneingabegerät 2 eine Prüfschaltung 8 vorgesehen, die gleichfalls durch die Verarbeitungseinheit 6 kontrolliert wird und zu vorgegebenen Zeitpunkten einen Prüfvorgang auslöst und dabei für mindestens einen der Eingabekanäle 7-0, 7-1...7-7 des fehlersicheren Dateneingabegeräts 2 einen Statuswechsel bewirkt. Dieser Statuswechsel wird von einer internen Logik 9 überwacht, wobei die interne Logik 9 eine Fehlermeldung ausgibt, wenn der von der Prüfschaltung 8 ausgelöste Statuswechsel sich nicht auf den Status des jeweiligen Eingangskanals 7-0, 7-1...7-7 auswirkt. Am Ende des Prüfvorgangs wird der durch die Prüfschaltung 8 bewirkte Statuswechsel wieder rückgängig gemacht. Für das Auslesen der betroffenen Eingabekanäle 7-0, 7-1...7-7 während des normalen Betriebs des fehlersicheren Dateneingabegeräts 2 ist der Prüfvorgang dabei vollkommen transparent.

Wenn die Eingänge 7-0, 7-1...7-7 der Verarbeitungseinheit 6 zusätzlich auch in negierter Form 7-0', 7-1'... 7-7' zugeführt werden, sind die Eingangskanäle antivalent ausgelegt. Die Verarbeitungseinheit 6 liest dann für den betreffenden Eingangskanal, z.B. 7-2 dessen Status, z.B. logisch 0, und für den antivalenten korrespondierenden Eingang 7-2' als negierten Status das entsprechende Komplement, in diesem Falle also logisch 1. Fehlfunktionen bei der Weiterleitung der Stati der jeweiligen Eingangskanäle können durch die Verarbeitungseinheit 6 dann einfach und sicher erkannt werden, indem jeweils überprüft wird, ob auf dem jeweiligen Eingangskanal und auf dem dazu antivalenten Eingangskanal komplementäre Stati vorliegen.

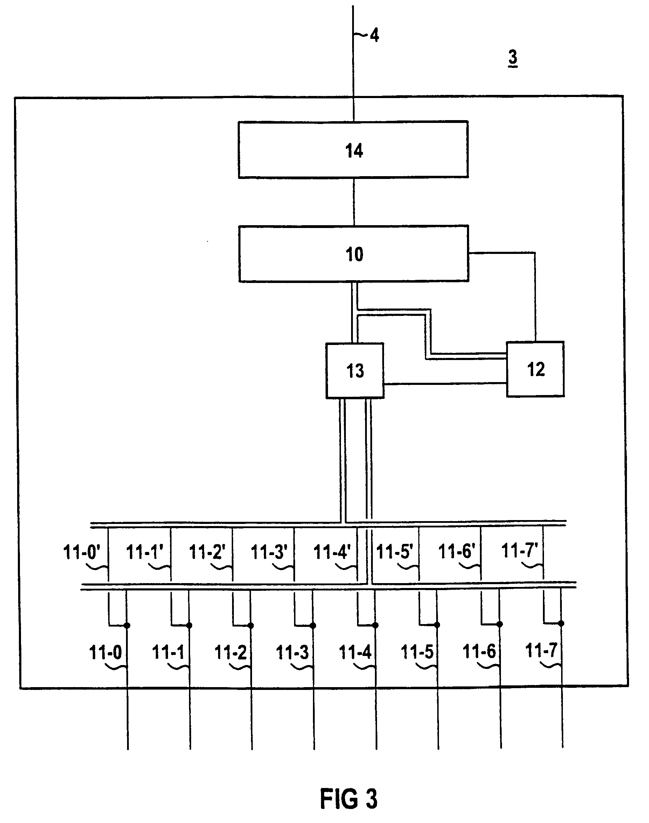

In FIG 3 ist ein Blockschaltbild eines fehlersicheren Datenausgabegerätes 3 dargestellt, das mittels eines als Busanschaltung 14 ausgebildeten Bus-ASICs 14 an den Prozeßbus 4 angeschlossen ist. Das fehlersichere Datenausgabegerät 3 weist eine Verarbeitungseinheit 10 zur Verarbeitung benutzer-projektierbarer logischer Verknüpfungen auf, wobei die Verarbeitungseinheit 10 die Nutzinformation eines über den Prozeßbus 4 empfangenen Telegramms auswertet, die Nutzinformation der benutzerprojektierbaren logischen Verknüpfung unterwirft, und entsprechend dem Ergebnis der logischen Verknüpfung den mindestens einen Ausgabekanal 11-0, 11-1...11-7 ansteuert.

In der Darstellung gemäß FIG 3 weist das fehlersichere Datenausgabegerät 3 ein als watchdog 12 ausgebildete, und die Verarbeitungseinheit 10 überwachende Überwachungsschaltung 12 auf, welche den mindestens einen Ausgabekanal 11-0, 11-1...11-7 in einen sicheren Zustand überführt, sobald eine Fehlfunktion der Verarbeitungseinheit 10 festgestellt ist. Zu diesem Zweck überwacht die Überwachungsschaltung 12 die Funktion der Verarbeitungseinheit 10, wobei im Falle einer Fehlfunktion der Verarbeitungseinheit 10 die Stati der jeweiligen Ausgabekanäle 11-0, 11-1...11-7 durch die Überwachungsschaltung 12 bestimmt werden, wozu eine Treiberschaltung 13 vorgesehen ist, die sowohl von der Verarbeitungseinheit 10 als auch von der Überwachungsschaltung 12 ansteuerbar ist.

Für den Fall einer Fehlfunktion der Verarbeitungseinheit 10, überschreibt die durch die Überwachungsschaltung 12 ausgegebene Ansteuerung der jeweiligen Ausgabekanäle 11-0, 11-1...11-7 die jeweilige Ansteuerung der Verarbeitungseinheit 10, die zu diesem Zeitpunkt bereits als fehlerhaft erkannt wurde.

In der Darstellung gemäß FIG 3 ist das fehlersichere Datenausgabegerät 3 ferner derartig ausgebildet, daß der durch die Verarbeitungseinheit ansteuerbare Ausgabekanal 11-0, 11-1...11-7 als rücklesbarer Ausgabekanal 11-0', 11-1'... 11-7' ausgebildet ist, daß das dem Ausgabekanal 11-0, 11-1...11-7 zuführbare Signal auch der Überwachungsschaltung 12 zuführbar ist, daß die Überwachungsschaltung 12 das ihr zugeführte und das vom Ausgabekanal zurückgelesene Signal 11-0', 11-1'...11-7' vergleicht und bei Abweichungen den betroffenen Ausgabekanal 11-0, 11-1...11-7 in einen sicheren Zustand überführt.

In der vorstehenden Beschreibung wird stets von Eingabe- bzw. Ausgabegeräten 2, 3 mit jeweils acht Eingabe- bzw. Ausgabekanälen ausgegangen. Selbstverständlich kann die Anzahl der Kanäle auch größer oder kleiner als acht, z.B. 16 oder 32, sein.

## Patentansprüche

1. Verfahren zum Betrieb eines Automatisierungssystems, wobei das Automatisierungssystem mindestens eine Eingabeeinheit zur Aufnahme von Prozeßsignalen und mindestens eine Ausgabeeinheit zum Ansteuern externer Peripherie aufweist, die kommunikativ über einen Bus miteinander verbunden sind,
**dadurch gekennzeichnet,**
- **daß** zumindest eine der Eingabeeinheiten und zumindest eine der Ausgabeeinheiten als fehlersichere Eingabeeinheit (2) bzw. fehlersichere Ausgabeeinheit (3) ausgebildet sind,
- **daß** die fehlersichere Eingabeeinheit (2) der fehlersicheren Ausgabeeinheit (3) zu vorgegebenen Zeitpunkten ein Telegramm übermittelt,
- **daß** das Telegramm zumindest eine Nutzinformation, eine die adressierte Ausgabeeinheit (3) bezeichnende Zielkennung und eine die sendende Eingabeeinheit (2) bezeichnende Ursprungskennung aufweist,
- **daß** die Ausgabeeinheit (3), falls sie anhand der Zielkennung erkennt, dass das Telegramm für sie bestimmt ist oder anhand der Ursprungskennung erkennt, dass die Nutzinformation von ihr auszuwerten ist, den kontinuierlichen Empfang des Telegramms als Indiz für eine intakte Kommunikatipnsbeziehung auswertet und andernfalls die angeschlossene Peripherie in einen sicheren Zustand überführt.

2. Automatisierungssystem mit mindestens einer Eingabeeinheit zur Aufnahme von Prozeßsignalen und mindestens einer Ausgabeeinheit zum Ansteuern externer Peripherie, die kommunikativ über einen Bus miteinander verbunden sind,
**dadurch gekennzeichnet,**
- **daß** zumindest eine der Eingabeeinheiten und zumindest eine der Ausgabeeinheiten als fehlersichere Eingabeeinheit (2) bzw. fehlersichere Ausgabeeinheit (3) ausgebildet sind,
- **daß** die fehlersichere Eingabeeinheit (2) Mittel zur Übermittlung eines Telegramms zu vorgegebenen Zeitpunkten an die fehlersichere Ausgabeeinheit (3) enthält,
- **daß** das Telegramm zumindest eine Nutzinformation, eine die adressierte Ausgabeeinheit (3) bezeichnende Zielkennung und eine die sendende Eingabeeinheit (2) bezeichnende Ursprungskennung aufweist, wobei
- die Ausgabeeinheit (3), falls sie anhand der Zielkennung erkennt, dass das Telegramm für sie bestimmt ist oder anhand der Ursprungskennung erkennt, dass die Nutzinformation von ihr auszuwerten ist, den kontinuierlichen Empfang des Telegramms als Indiz für eine intakte Kommunikationsbeziehung auswertet und andernfalls die angeschlossene Peripherie in einen sicheren Zustand überführt.

3. Fehlersicheres Dateneingabegerät mit mindestens einem Eingabekanal zum Anschluß peripherer Sensorik in einem Automatisierungssystem nach Anspruch 2,
**dadurch gekennzeichnet,**
**daß** eine Prüfschaltung vorgesehen ist, die zu vorgegebenen Zeitpunkten einen Prüfvorgang auslöst und dabei für mindestens einen der Eingabekanäle des fehlersicheren Dateneingabegerätes einen Statuswechsel bewirkt, wobei eine interne Logik den Statuswechsel überwacht und gegebenenfalls eine Fehlermeldung ausgibt, wobei der durch die Prüfschaltung bewirkte Statuswechsel am Ende des Prüfvorgangs wieder rückgängig gemacht wird und wobei der Prüfvorgang für das Auslesen des betroffenen Eingabekanals vollkommen transparent ist.

4. Fehlersicheres Dateneingabegerät nach Anspruch 3,
**dadurch gekennzeichnet,**
**daß** der mindestens eine Eingabekanal antivalent ausgelegt ist.

5. Fehlersicheres Datenausgabegerät mit mindestens einem Ausgabekanal zum Anschluß peripherer Aktorik in einem Automatisierungssystem nach Anspruch 2,
**dadurch gekennzeichnet,**
**daß** eine Verarbeitungseinheit zur Verarbeitung benutzerprojektierbarer logischer Verknüpfungen vorgesehen ist, wobei die Verarbeitungseinheit das Nutzinformation eines empfangenen Telegramms auswertet, das Nutzinformation der benutzerprojektierbaren logischen Verknüpfung unterwirft und entsprechend dem Ergebnis der logischen Verknüpfung den mindestens einen Ausgabekanal ansteuert.

6. Fehlersicheres Datenausgabegerät nach Anspruch 5,
**dadurch gekennzeichnet,**
**daß** die Verarbeitungseinheit die zeitliche Abfolge der mit dem Nutzinformation übermittelten Prozeßdaten überwacht und den mindestens einen Ausgabekanal nur dann ansteuert, wenn die zeitliche Abfolge der zur Ansteuerung der Ausgabekanals erforderlichen Daten innerhalb vorgegebener Toleranzen liegt.

7. Fehlersicheres Datenausgabegerät nach Anspruch 5 oder 6,
**dadurch gekennzeichnet,**
**daß** eine als Watchdog ausgebildete und die Verarbeitungseinheit überwachende Überwachungsschaltung vorgesehen ist, welche den mindestens einen Ausgabekanal in einen sicheren Zustand überführt, sobald eine Fehlfunktion der Verarbeitungseinheit festgestellt ist.

8. Fehlersicheres Datenausgabegerät nach Anspruch 7,
**dadurch gekennzeichnet,**
**daß** der durch die Verarbeitungseinheit ansteuerbare Ausgabekanal als rücklesbarer Ausgabekanal ausgebildet ist, daß das dem Ausgabekanal zuführbare Signal auch der Überwachungsschaltung zuführbar ist, daß die Überwachungsschaltung das ihr zugeführte und das vom Ausgabekanal zurückgelesene Signal vergleicht und bei Abweichungen den betroffenen Ausgabekanal oder sämtliche Ausgabekanäle in einen sicheren Zustand überführt.

## Claims

1. Method for operating an automation system,
- wherein the automation system exhibits at least one input unit for receiving process signals and at least one output unit for driving external peripherals which are connected to one another communicatively via a bus, **characterized,**
- **in that** at least one of the input units and at least one of the output units are constructed as fault-tolerant input unit (2) and, respectively, as fault-tolerant output unit (3),
- **in that** the fault-tolerant input unit (2) transfers a message to the fault-tolerant output unit (3) at predetermined times,
- **in that** the message exhibits at least one user information item, one destination identifier designating the addressed output unit (3) and one origin identifier designating the transmitting input unit (2),
- **in that** the output unit (3), if it recognizes, by means of the destination identifier, that the message is intended for it, or by means of the origin identifier, that the user information item is to be evaluated by it, evaluates the continuous reception of the message as an indication of a functioning communication relation and otherwise sets the connected peripherals to a safe state.

2. Automation system having at least one input unit for receiving process signals and at least one output unit for driving external peripherals which are connected to one another communicatively, by means of a bus
**characterized**
- **in that** at least one of the input units and at least one of the output units are constructed as fault-tolerant input unit (2) and, respectively as fault-tolerant output unit (3),
- **in that** the fault-tolerant input unit (2) contains means for transferring a message to the fault-tolerant output unit (3) at predetermined times,
- **in that** the message exhibits at least one user information item, one destination identifier designating the addressed output unit (3) and one origin identifier designating the transmitting input unit (2),
- the output unit (3), if it recognizes, by means of the destination identifier, that the message is intended for it, or by means of the origin identifier, that the user information is to be evaluated by it, evaluates the continuous reception of the message as an indication of a functioning communication relation and otherwise sets the connected peripherals to a safe state.

3. Fault-tolerant data input device having at least one input channel for connecting peripheral sensors in an automation system according to Claim 2, **characterized in that** a test circuit is provided which triggers a test process at predetermined times and during this process effects a status change for at least one of the input channels of the fault-tolerant data input device, an internal logic monitoring the status change and, if necessary, outputting an error message, wherein the status change effected by the test circuit is cancelled again at the end of the test process and wherein the test process is completely transparent for reading out the affected input channel.

4. Fault-tolerant data input device according to Claim 3, **characterized in that** the at least one input channel is designed to be antivalent.

5. Fault-tolerant data output device having at least one output channel for connecting peripheral actuators in an automation system according to Claim 2, **characterized in that** a processing unit for processing user-designable logical combinations is provided, wherein the processing unit evaluates the user information of a received message, which subjects the user information to the user-designable logical combination and drives the at least one output channel in accordance with the result of the logical combination.

6. Fault-tolerant data output device according to Claim 5, **characterized in that** the processing unit monitors the time sequence of the process data transferred with the user information and drives the at least one output channel only if the time sequence of the data required for driving the output channel is within predetermined tolerances.

7. Fault-tolerant data output device according to Claim 5 or 6, **characterized in that** a monitoring circuit constructed as watchdog and monitoring the processing unit is provided which sets the at least one output channel to a safe state as soon as a malfunction of the processing unit is detected.

8. Fault-tolerant data output device according to Claim 7, **characterized in that** the output channel, which can be driven by the processing unit, is constructed as readback output channel, **in that** the signal which can be supplied to the output channel can also be supplied to the monitoring circuit, **in that** the monitoring circuit compares the signal supplied to it and read back from the output channel and, in the case of deviations, sets the affected output channel or all output channels to a safe state.

## Revendications

1. Procédé pour faire fonctionner un système d'automatisation, le système d'automatisation comportant au moins une unité d'entrée pour la réception de signaux de processus et au moins une unité de sortie pour la commande d'une périphérie externe, lesquelles unités sont reliées entre elles pour communiquer par l'intermédiaire d'un bus,
**caractérisé par le fait que**
- au moins l'une des unités d'entrée est conçue comme unité d'entrée protégée contre les erreurs (2) et au moins l'une des unités de sortie est conçue comme unité de sortie protégée contre les erreurs (3),
- l'unité d'entrée protégée contre les erreurs (2) transmet un télégramme à des instants prédéterminés à l'unité de sortie protégée contre les erreurs (3),
- le télégramme comporte au moins une information utile, un identificateur de destination désignant l'unité de sortie adressée (3) et un identificateur d'origine désignant l'unité d'entrée émettrice (2),
- l'unité de sortie (3), si elle reconnaît à l'aide de l'identificateur de destination que le télégramme lui est destiné ou à l'aide de l'identificateur d'origine que l'information utile doit être évaluée par elle, évalue la réception continue du télégramme comme indice d'une liaison de communication intacte et fait passer sinon la périphérie raccordée dans un état sûr.

2. Système d'automatisation avec au moins une unité d'entrée pour la réception de signaux de processus et avec au moins une unité de sortie pour la commande d'une périphérie externe, lesquelles unités sont reliées entre elles pour communiquer par l'intermédiaire d'un bus,
**caractérisé par le fait que**
- au moins l'une des unités d'entrée est conçue comme unité d'entrée protégée contre les erreurs (2) et au moins l'une des unités de sortie est conçue comme unité de sortie protégée contre les erreurs (3),
- l'unité d'entrée protégée contre les erreurs (2) contient des moyens pour transmettre un télégramme à des instants prédéterminés à l'unité de sortie protégée contre les erreurs (3),
- le télégramme comporte au moins une information utile, un identificateur de destination désignant l'unité de sortie adressée (3) et un identificateur d'origine désignant l'unité d'entrée émettrice (2), sachant que
- l'unité de sortie (3), si elle reconnaît à l'aide de l'identificateur de destination que le télégramme lui est destiné ou à l'aide de l'identificateur d'origine que l'information utile doit être évaluée par elle, évalue la réception continue du télégramme comme indice d'une liaison de communication intacte et fait passer sinon la périphérie raccordée dans un état sûr.

3. Appareil d'entrée de données protégé contre les erreurs avec au moins un canal d'entrée pour le raccordement d'un système capteur périphérique dans un système d'automatisation selon la revendication 2,
**caractérisé par le fait qu'**il est prévu un circuit de test qui déclenche une opération de test à des instants prédéterminés et qui provoque ce faisant un changement d'état pour au moins l'un des canaux d'entrée de l'appareil d'entrée de données protégé contre les erreurs, une logique interne surveillant le changement d'état et fournissant éventuellement un message d'erreur, le changement d'état provoqué par le circuit de test étant annulé à la fin de l'opération de test et l'opération de test étant complètement transparente pour la lecture du canal d'entrée concerné.

4. Appareil d'entrée de données protégé contre les erreurs selon la revendication 3,
**caractérisé par le fait que** le ou les canaux d'entrée sont conçus antivalents.

5. Appareil de sortie de données protégé contre les erreurs avec au moins un canal de sortie pour le raccordement d'un système actionneur périphérique dans un système d'automatisation selon la revendication 2,
**caractérisé par le fait qu'**une unité de traitement est prévue pour le traitement de combinaisons logiques développables par l'utilisateur, l'unité de traitement évaluant l'information utile d'un télégramme reçu, soumettant l'information utile à la combinaison logique développable par l'utilisateur et commandant en fonction du résultat de la combinaison logique le ou les canaux de sortie.

6. Appareil de sortie de données protégé contre les erreurs selon la revendication 5,
**caractérisé par le fait que** l'unité de traitement surveille la chronologie des données de processus transmises avec l'information utile et ne commande le ou les canaux de sortie que si la chronologie des données nécessaires à la commande du ou des canaux de sortie se trouve dans les limites de tolérances prédéterminées.

7. Appareil de sortie de données protégé contre les erreurs selon la revendication 5 ou 6,
**caractérisé par le fait qu'**il est prévu un circuit de surveillance qui est conçu comme un chien de garde, qui surveille l'unité de traitement et qui fait passer le ou les canaux de sortie dans un état sûr dès qu'un dysfonctionnement de l'unité de traitement est constaté.

8. Appareil de sortie de données protégé contre les erreurs selon la revendication 7,
**caractérisé par le fait que** le canal de sortie commandable par l'unité de traitement est conçu comme un canal de sortie pouvant être relu, que le signal pouvant être envoyé au canal de sortie peut aussi être envoyé au circuit de surveillance, que le circuit de surveillance compare le signal qui lui est envoyé et le signal relu sur le canal de sortie et que, en cas de différences, il fait passer le canal de sortie considéré ou tous les canaux de sortie dans un état sûr.
